# EUROPEAN PATENT SPECIFICATION

(11) **EP 4 652 351 B1**
(45) Date of publication and mention of the grant of the patent: **12.08.2026**
(21) Application number: 23817500.4
(22) Date of filing: 23.11.2023
(51) Int. Cl.: E21B 17/01, F16L 1/24

(54) **BUOYANCY MODULE**
AUFTRIEBSMODUL
MODULE DE FLOTTABILITÉ

(30) Priority: 19.01.2023 GB 202300794
(43) Date of publication of application: 26.11.2025
(73) Proprietor: Advanced Innergy Ltd, Gloucester, Gloucestershire GL2 4PA (GB)
(72) Inventor: FOX, Jonathan, Skelmersdale, Lancashire WN8 8EA (GB); BURGESS, Alan, Skelmersdale, Lancashire WN8 8EA (GB)
(74) Representative: Bartle Read
(86) International application number: PCT/GB2023/053055
(87) International publication number: WO 2024/153898

(56) References cited:
- GB-A- 2 551 788
- GB-A- 2 582 601
- US-A1- 2014 326 461
- US-B1- 6 524 152

## Description

The present invention is concerned with buoyancy for elongate members deployed underwater.

There are numerous existing examples of an elongate underwater member being provided with buoyancy to support its weight at least partly. In this way tension in the member due to its weight, which could otherwise be transmitted to a tether point at the top of the member, can be limited. The member may be supported by the buoyancy in some chosen configuration such as the known pliant, W-wave, lazy-wave or steep shapes. Examples of elongate underwater members requiring buoyancy include risers used in hydrocarbon extraction, umbilicals and electrical cabling.

Known distributed buoyancy modules often take the form of a pair of approximately semicylindrical half shells to be secured to one another around the elongate member, facing surfaces of the half shells being provided with respective channels which together form a passage through the assembled module to receive the elongate member. Examples are provided in GB2393152A.

Provision typically needs to be made to locate the buoyancy module. This may be achieved using a clamp (such as the one disclosed in GB2288205A) secured to the elongate member and engaging with the buoyancy module to prevent it from moving along the elongate member. The clamp may be received in a pocket within the buoyancy module.

The elongate member typically suffers variable curvature in service and buoyancy applied to it needs to be able to accommodate this without creating excessive local bending moments, e.g. at the point where the member emerges from the buoyancy module, which could otherwise cause damage. It also needs to maintain engagement with the elongate member despite the variable curvature. Other important design criteria include economy of manufacture and ease of deployment.

The prior art includes some buoyancy devices which are adapted to enable the elongate member to curve.

US3952526A, Watkins *et al,* discloses *inter alia* an arrangement for mounting buoyancy to a subsea riser in which a coupling is made between a shell of a buoyancy chamber and a flange on the riser through a ball-and-socket-type joint. The mechanism comprises several individual parts and is thus complex. Its suitability to survive and function in a marine environment, subject to fouling, for an extended period is questionable.

US6457527B2, Wells, discloses a floatation collar for a marine riser in which an arrangement of twisted straps connects a metal collar around the riser to the floatation collar itself. It is again a somewhat complex arrangement.

Despite these prior art devices, a need exists for a floatation device that can satisfy the above-explained design criteria and which is simple in manufacture and potentially robust in use.

According to a first aspect of the present invention there is a buoyancy module for mounting on an elongate member which is to be deployed underwater, the buoyancy module comprising at least two shells to be assembled to one another around the elongate member, each shell comprising a unitary body comprising:
a buoyancy body portion;
a first collar portion coupled to the buoyancy body portion through a first flexible neck portion;
a second collar portion coupled to the buoyancy body through a second flexible neck portion;
the buoyancy body portion being between the first collar portion and the second collar portion, and the shells forming, when assembled, a buoyancy module in which:
the buoyancy body portions together form a buoyancy body;
the first collar portions together form a first collar for embracing the elongate member;
the first flexible neck portions together form a first flexible neck coupling the first collar to the buoyancy body, the first flexible neck permitting some angular movement of the first collar with respect to the buoyancy body;
the second collar portions together form a second collar for embracing the elongate member;
the second flexible neck portions together form a second flexible neck coupling the second portion to the buoyancy body, the second flexible neck permitting some angular movement of the second collar with respect to the buoyancy body;
a through-going passage leads through the first collar, the first flexible neck, the buoyancy body, the second flexible neck and the second collar to receive the elongate member, the passage having an oversize region between the collars to permit curvature of the elongate member
so that in use, changes of curvature of the elongate member where it passes through the buoyancy module are accommodated by virtue of angular movement of the first and second collars
Specific embodiments of the present invention will now be described, by way of example only, with reference to the accompanying drawings, in which:
Figure 1 depicts a half shell of a first buoyancy module embodying the present invention, oriented such that a mating face lies toward the viewer;
Figure 2 depicts the half shell of Figure 1, oriented such that the mating face is directed away from the viewer and so is not seen;
Figure 3 depicts the first buoyancy module when assembled using straps, viewed along a radial direction;
Figure 4 depicts the buoyancy module viewed along an axial direction;
Figure 5 depicts a half shell of a second buoyancy module embodying the present invention, oriented such that a mating face lies toward the viewer;
Figure 6 depicts a set of the second buoyancy modules deployed on a cable in a string;
Figure 7 depicts a half shell of a third buoyancy module embodying the present invention from one side;
Figure 8 depicts the half shell of Figure 7 viewed from the other side.

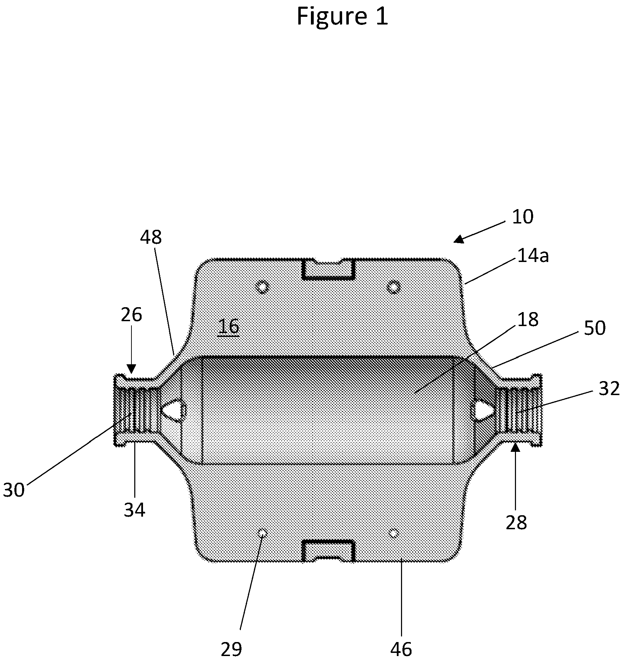

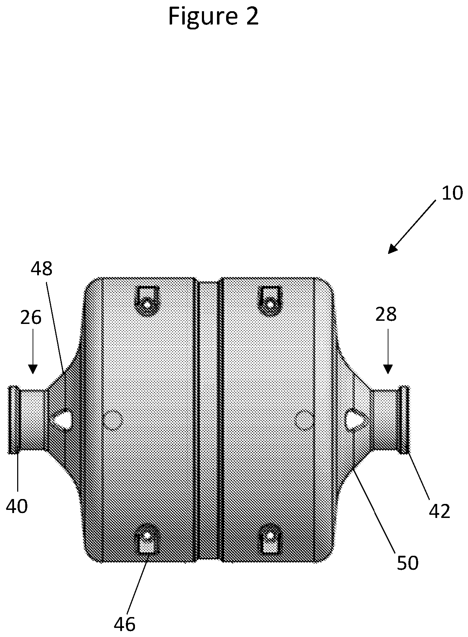

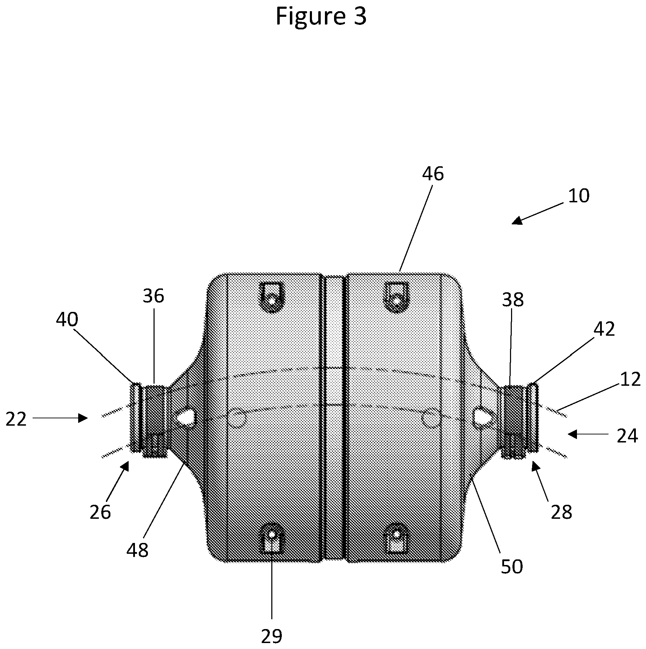

The first buoyancy module 10 depicted in Figures 1 to 4 is a distributed buoyancy module to be mounted on an elongate member 12 which is represented in phantom in Figure 3.

The invention imposes no restriction on the nature of the elongate member, which may, by way of example and not of limitation, be a cable, an umbilical, a conduit (for hydrocarbons including oil or gas or for any other material), a riser, a pipeline, or any other elongate member deployed underwater and requiring buoyancy. However, the first buoyancy module 10 (like the other buoyancy modules depicted and described herein) is well suited for use in relation to electrical cabling for offshore wind turbines, and particularly (although not exclusively) floating offshore wind turbines.

Whereas offshore wind turbines are often mounted atop a monopile leg whose lower end is anchored in the seabed, a floating wind turbine is instead carried on a stable floating platform which is typically kept in position through mooring lines led to fixed structures on the seabed. Cabling used to output electrical power from floating wind turbines may require distributed buoyancy. The buoyancy needs to accommodate changes over time in the curvature of the cabling due to factors such as tide, drift of the platform, waves, and subsea currents, whilst maintaining secure engagement with the cabling and avoiding imposing potentially damaging local stress upon it.

The first buoyancy module 10 comprises an identical pair of half shells 14a, 14b to be assembled to one another around the elongate member 12. Half shell 14a has a semi-annular cross section with a mating face 16, which in the present embodiment is a flat face lying in a plane containing the axis of the buoyancy module 10. When the mating faces 16 of the two half shells 14a, 14b are in proximity, the buoyancy module 10 that the half shells form is of circular cross section. Other shapes could however be adopted in other embodiments of the invention. Half shell 14a has a channel 18 in its mating face 16, which in the present embodiment is semi-circular in cross section, so that in the assembled buoyancy module 10 the channels 18 of the two half shells 14a, 14b together form a circular through-going passage 20 to receive the elongate member 12, the passage having first and second open ends 22, 24 defined respectively by first and second collars 26, 28. Internal faces 30, 32 of the collars, which are circular in the assembled buoyancy module 10, are sized to closely embrace the elongate member 12 and carry ribs 34 to increase grip.

Holes 29 in the half shells 14a, 14b can be used to facilitate handling prior to deployment, but may receive fasteners to secure one half shell 14a to the other 14b.

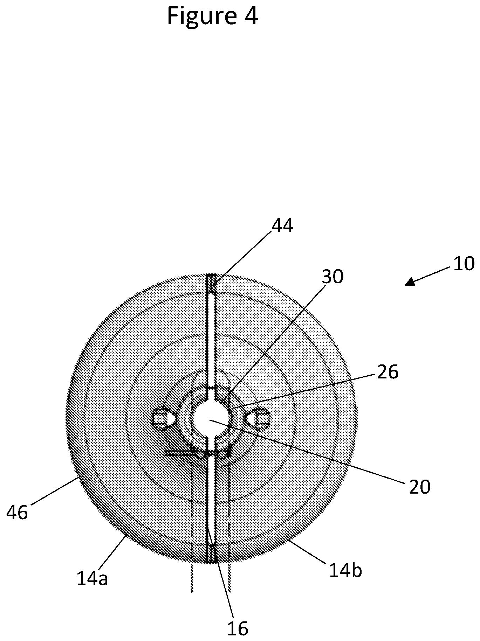

Straps 36, 38 are placed around respective collars 26, 28 and tensioned to urge the collars 26, 28 into engagement with the elongate member 12 within. Upstanding circumferential lips 40, 42 on the collars' exteriors retain the straps 36, 38 in position. The mating faces 16 of the half shells may in other embodiments be in direct contact with one another, but in this example they are slightly separated by spacers 44 (see Figure 4), so that the straps 36, 38 are able to draw the two halves of each collar toward one another. In this way some variation of the external diameter of the elongate member 12 can be accommodated without compromising the engagement of the collars 26, 28 with the elongate member 12.

The majority of the volume of the buoyancy module 10 is formed by a central buoyancy body 46 of larger diameter than the collars 26, 28. First collar 26 is coupled to the buoyancy body 46 through an integral, flexible element which in the present embodiment takes the form of a frustoconical hollow first neck 48 which diverges in the direction from the collar 26 to the buoyancy body 46. The neck 48, being somewhat flexible, permits some degree of angular movement of the first collar 26 with respect to the buoyancy body 46. The second collar 28 is coupled to the buoyancy body through a similarly formed second neck 50 which permits some degree of angular movement of the second collar 28 with respect to the buoyancy body 46. Between the collars 26, 28, the passage 20 is oversize, having an internal diameter larger than those of the collars 26, 28 (and larger than the external diameter of the elongate member 12). The flexible necks 48, 50 and the oversize passage 20 make it possible to accommodate variations in curvature of the elongate member 12.

In Figure 3 the elongate member 12 is seen to be curved where it passes through the buoyancy module 10. Variable curvature of the elongate member 12 is to be expected as explained already. The necks 48, 50 enable the collars 26, 28 to turn somewhat to locally align with the elongate member 12. In Figure 3, purely for the sake of simplicity, the collars 26, 28 are not actually depicted in line with the elongate member 12. But in practice, the first collar 26 would turn somewhat anticlockwise, the second collar 28 would turn somewhat clockwise, and in this way the curvature of the elongate member 12 would be accommodated without compromising the engagement of the collars 26, 28 with the elongate member 12. The curvature of the elongate member 12 causes it to be laterally displaced in the region between the collars 26, 28, but this displacement is accommodated by virtue of the oversize portion of the passage 20.

The facility for the collars 26, 28 to turn somewhat provides important advantages. It avoids local concentrations of stress in the regions where the elongate member 12 emerges from the buoyancy module 10. It facilitates gripping of the elongate member 12 by the collars 26, 28, so that in the present embodiment the buoyancy module 10 is able to locate itself on the elongate member 12 without need of additional clamps (although clamps may in other embodiments be provided). It enables the buoyancy module 10 to be stably supported on the elongate member 12 at two separate locations. And the buoyancy module 10 may in suitable cases serve a function analogous to that of a bend stiffener, contributing stiffness to the elongate member 12 where needed.

The half shells 14a, 14b may be formed as one-piece mouldings. A suitable material is syntactic foam, comprising a settable polymer resin incorporating density-reducing elements, typically in the form of macrospheres. A favoured material is polyurethane with an admixture of thermoplastic density-reducing spheres. Presence of macrospheres in the necks 48, 50 and/or in the collars 26, 28 might however impair the structural integrity of these parts. In the present embodiment, this potential problem is solved by providing that the thickness of the necks 48, 50 is smaller than the diameter of the macrospheres. The mould itself is not depicted herein but it will of course comprise a zone for forming the buoyancy body 46 communicating via a zone for forming the first neck 48 with a zone for forming the first collar 26. The zone for forming the first neck 48 is too shallow for the macrospheres to enter it. Hence if the macrospheres are placed in the zone for forming the buoyancy body 46, they will, during the subsequent moulding process, be unable to enter the portions of the mould forming the first neck 48 and the first collar 26. In the same manner, the macrospheres are excluded from the second collar 28 and the second neck 50 The result is that only the buoyancy body 46, which is not highly stressed, incorporates the macrospheres, thus being of lower density than the other parts of the buoyancy module 10. The settable resin used for the moulding may be an elastomer. Polyurethane is suitable and may be used.

In other embodiments, the half shells 14a, 14b may comprise a rotomoulded outer envelope containing a buoyant filler material, which may for example comprise expanded polystyrene.

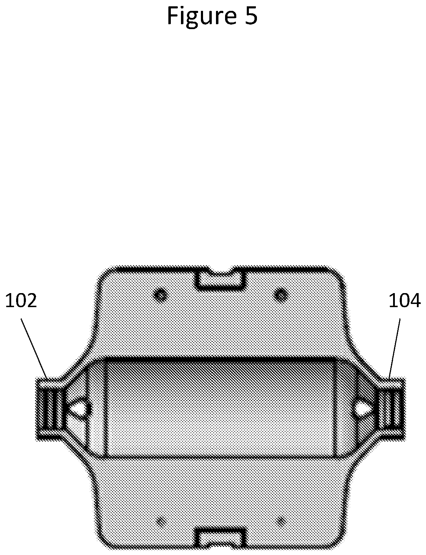

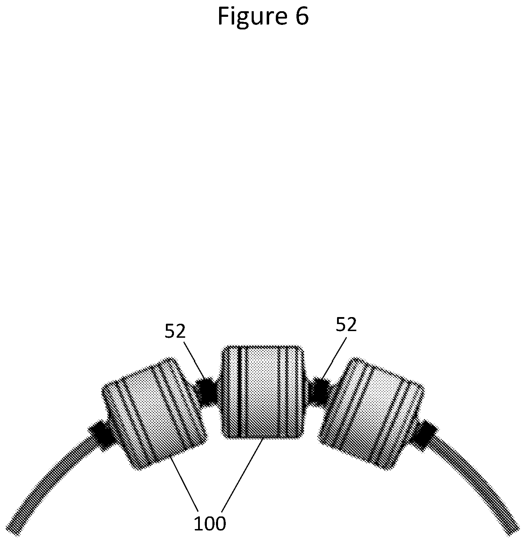

The second buoyancy modules 100 depicted in Figures 5 and 6 differ from the first in that their collars 102, 104 lack the lips 40, 42 of the first embodiment. Multiple second buoyancy modules 100 can be placed adjacent one another in a string as in Figure 6, where the collars of neighbouring buoyancy modules 100 are juxtaposed and are secured by a shared tension strap 52. This reduces expense and installation time by minimising the number of tension straps to be applied. Whereas a set of n *separate* modules would require 2n straps, a *string* of n modules with straps shared in the illustrated manner requires only n+1 straps.

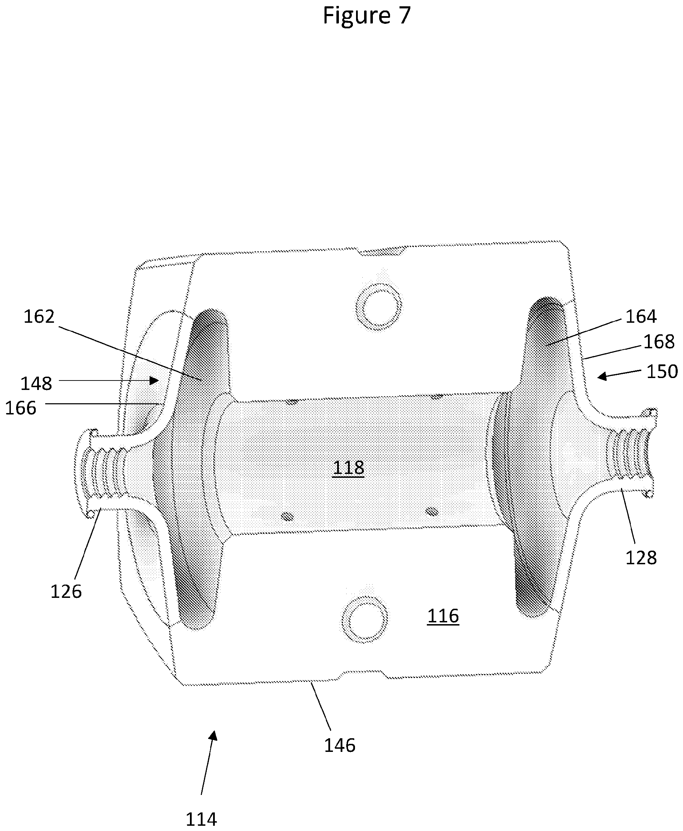

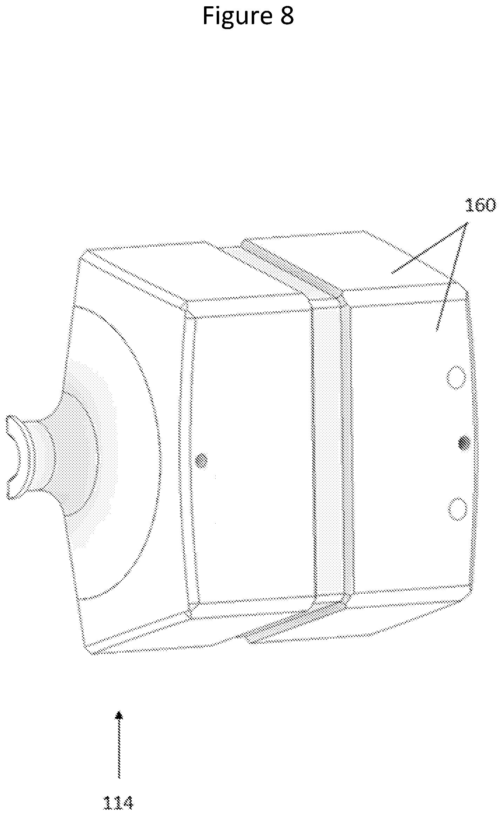

Figures 7 and 8 depict a half shell 114 of a third buoyancy module which is similar to the half shells 14 described above in comprising a first collar portion 126 which forms part of the first collar (along with a similarly formed portion of a second half shell, not see in these drawings), a second collar portion 128 which forms part of the second collar, a buoyancy body portion 146 disposed between the collar portions 126, 128, and a channel 118 formed in a mating face 116, which in the assembled buoyancy module forms, along with the complementary channel of the other half shell, a through-going passage for receipt of the elongate member.

The half shell 114 of Figures 7 and 8 differs from that depicted in Figures 1 to 4 in that its exterior shape, viewed in cross section, is not a part of a circle. More specifically this shape is polygonal. In this instance the shape has three exterior faces 160 (in addition to the mating face 116) so that the assembled buoyancy module - made up of two of the half shells 114 - is hexagonal. This shape is advantageous in handling and stacking the half shells prior to deployment, since the polygonal half shells 114 cannot roll and can be stacked in a more compact arrangement than half round shells.

The half shell 114 also differs from the earlier-described embodiments in having cavities 162, 164 which lie respectively adjacent flexible neck portions 148, 150. These cavities 162, 164 reduce the stiffness of the neck portions 148, 150, facilitating turning of the first and second collar portions 126, 128. That is, they reduce the stiffness of the buoyancy module against curvature of the elongate member. In the present embodiment the cavities are part toroidal. The adjacent neck portions 148, 150 each comprise a part frustoconical wall 166, 168 whose flexure accommodates changes of angle of the collar portions 148, 150.

## Claims

1. A buoyancy module (10, 100) for mounting on an elongate member (12) which is to be deployed underwater, the buoyancy module (10, 100) comprising at least two shells (14a, 14b, 114) to be assembled to one another around the elongate member (12), each shell comprising a unitary body comprising:
a buoyancy body portion (46, 146);
a first collar portion (26, 126) coupled to the buoyancy body portion (46, 146) through a first flexible neck portion (148);
a second collar portion (28, 128) coupled to the buoyancy body through a second flexible neck portion (150);
the buoyancy body portion (46, 146) being between the first collar portion (26, 126) and the second collar portion (28, 128), and the shells (14a, 14b, 114) forming, when assembled, a buoyancy module (10, 100) in which:
the buoyancy body portions (46, 146) together form a buoyancy body;
the first collar portions (26, 126) together form a first collar for embracing the elongate member (12);
the first flexible neck portions (148) together form a first flexible neck coupling the first collar to the buoyancy body, the first flexible neck permitting some angular movement of the first collar with respect to the buoyancy body;
the second collar portions (28, 128) together form a second collar for embracing the elongate member (12);
the second flexible neck portions (150) together form a second flexible neck coupling the second portion to the buoyancy body, the second flexible neck permitting some angular movement of the second collar with respect to the buoyancy body;
a through-going passage (20) leads through the first collar, the first flexible neck, the buoyancy body, the second flexible neck and the second collar to receive the elongate member (12), the passage having an oversize region between the collars to permit curvature of the elongate member (12)
so that in use, changes of curvature of the elongate member (12) where it passes through the buoyancy module (10, 100) are accommodated by virtue of angular movement of the first and second collars.

2. A buoyancy module (10, 100) as claimed in claim 1 in which the first neck portion converges from the buoyancy body toward the first collar.

3. A buoyancy module (10, 100) as claimed in claim 2 in which the second neck portion converges from the buoyancy body toward the second collar.

4. A buoyancy module (10, 100) as claimed in any preceding claim in which each shell comprises a unitary plastics moulding.

5. A buoyancy body as claimed in claim 4 in which the buoyancy body incorporates discrete buoyancy elements which are not present in the collars or in the flexible elements.

6. A buoyancy module (10, 100) as claimed in claim 5 in which the discrete buoyancy elements are macrospheres.

7. A buoyancy module (10, 100) as claimed in claim 5 or claim 6 in which the first and second flexible neck portions (148, 150) both have a thickness which is too small to accommodate the discrete buoyancy elements.

8. A buoyancy module (10, 100) as claimed in any preceding claim, further comprising a first strap (36) arrangeable around the first collar portions (26, 126) to secure the first collar around the elongate member (12).

9. A buoyancy module (10, 100) as claimed in claim 8, further comprising a second strap (38) arrangeable around the second collar portions (28, 128) to secure the second collar around the elongate member (12).

10. A buoyancy module (10, 100) as claimed in any preceding claim in which each shell comprises at least one cavity adjacent at least one of the flexible neck portions.

11. A buoyancy module (10, 100) as claimed in claim 10 in which the flexible neck portion comprises a part-frustoconical wall.

12. A method of manufacture of a buoyancy module (10, 100) as claimed in claim 4 or in any subsequent claim when dependent on claim 4, the method comprising:
providing a shell mould comprising a zone for forming the buoyancy body portion (46, 146), communicating via a zone for forming the first flexible neck portion (148) with a zone for forming the first collar portion (26, 126), and
introducing discrete buoyancy elements into the zone for forming the buoyancy body portion (46, 146) prior to a moulding process,
wherein the zone for forming the first flexible neck portion (148) has a depth which is too small to accommodate the discrete buoyancy elements, so that the discrete buoyancy elements are excluded from the first flexible neck portion (148) and from the first collar portion (26, 126).

## Patentansprüche

1. Auftriebsmodul (10, 100) zur Befestigung an einem länglichen Element (12), das unter Wasser eingesetzt werden soll, wobei das Auftriebsmodul (10, 100) mindestens zwei Schalen (14a, 14b, 114) umfasst, die um das längliche Element (12) herum miteinander verbunden werden sollen, wobei jede Schale einen einteiligen Körper umfasst, umfassend:
ein Auftriebskörperabschnitt (46, 146);
ein erster Kragenabschnitt (26, 126), der über einen ersten flexiblen Halsabschnitt (148) mit dem Auftriebskörperabschnitt (46, 146) gekoppelt ist;
ein zweiter Kragenabschnitt (28, 128), der über einen zweiten flexiblen Halsabschnitt (150) mit dem Auftriebskörper gekoppelt ist;
wobei sich der Auftriebskörperabschnitt (46, 146) zwischen dem ersten Kragenabschnitt (26, 126) und dem zweiten Kragenabschnitt (28, 128) befindet und die Schalenabschnitte (14a, 14b, 114) im zusammengebauten Zustand ein Auftriebsmodul (10, 100) bilden, bei dem:
die Auftriebskörperabschnitte (46, 146) zusammen einen Auftriebskörper bilden;
die ersten Kragenabschnitte (26, 126) zusammen einen ersten Kragen bilden, der das längliche Element (12) umschließt;
die ersten flexiblen Halsabschnitte (148) zusammen eine erste flexible Halsverbindung bilden, die den ersten Kragen mit dem Auftriebskörper koppelt, wobei der erste flexible Hals eine gewisse Winkelbewegung des ersten Kragens gegenüber dem Auftriebskörper zulässt;
die zweiten Kragenabschnitte (28, 128) zusammen einen zweiten Kragen bilden, der das längliche Element (12) umschließt;
die zweiten flexiblen Halsabschnitte (150) zusammen einen zweiten flexiblen Hals bilden, der den zweiten Abschnitt mit dem Auftriebskörper koppelt, wobei der zweite flexible Hals eine gewisse Winkelbewegung des zweiten Kragens gegenüber dem Auftriebskörper zulässt;
einen durchgehenden Durchgang (20), der durch den ersten Kragen, den ersten flexiblen Hals, den Auftriebskörper, den zweiten flexiblen Hals und den zweiten Kragen verläuft, um das längliche Element (12) zu empfangen, wobei der Durchgang zwischen den Kragen eine überdimensionierte Region aufweist, um eine Krümmung des länglichen Elements (12) zu ermöglichen,
sodass im Betrieb Änderungen der Krümmung des länglichen Elements (12) an der Stelle, an der es das Auftriebsmodul (10, 100) durchläuft, durch die Winkelbewegung des ersten und des zweiten Kragens ausgeglichen werden.

2. Auftriebsmodul (10, 100) nach Anspruch 1, bei dem sich der erste Halsabschnitt vom Auftriebskörper in Richtung des ersten Kragens verjüngt.

3. Auftriebsmodul (10, 100) nach Anspruch 2, bei dem sich der zweite Halsabschnitt vom Auftriebskörper in Richtung des zweiten Kragens verjüngt.

4. Auftriebsmodul (10, 100) nach einem der vorstehenden Ansprüche, wobei jede Hülle ein einteiliges Kunststoffformteil umfasst.

5. Auftriebskörper nach Anspruch 4, wobei der Auftriebskörper separate Auftriebselemente enthält, die weder in den Kragen noch in den flexiblen Elementen vorhanden sind.

6. Auftriebsmodul (10, 100) nach Anspruch 5, bei dem es sich bei den einzelnen Auftriebselementen um Makrokugeln handelt.

7. Auftriebsmodul (10, 100) nach Anspruch 5 oder 6, bei dem der erste und der zweite flexible Halsabschnitt (148, 150) beide eine Dicke aufweisen, die zu gering ist, um die einzelnen Auftriebselemente aufzunehmen.

8. Auftriebsmodul (10, 100) nach einem der vorstehenden Ansprüche, ferner umfassend ein erstes Band (36), das um die ersten Kragenabschnitte (26, 126) herum angeordnet werden kann, um den ersten Kragen um das längliche Element (12) zu befestigen.

9. Auftriebsmodul (10, 100) nach Anspruch 8, ferner umfassend ein zweites Band (38), das um die zweiten Kragenabschnitte (28, 128) herum angeordnet werden kann, um den zweiten Kragen um das längliche Element (12) herum zu befestigen.

10. Auftriebsmodul (10, 100) nach einem der vorstehenden Ansprüche, wobei jede Hülle mindestens einen Hohlraum umfasst, der an mindestens einen der flexiblen Halsabschnitte angrenzt.

11. Auftriebsmodul (10, 100) nach Anspruch 10, wobei der flexible Halsabschnitt eine teilweise kegelstumpfförmige Wand umfasst.

12. Verfahren zum Herstellen eines Auftriebsmoduls (10, 100) nach Anspruch 4 oder nach einem beliebigen nachfolgenden Anspruch, sofern dieser von Anspruch 4 abhängt, das Verfahren umfassend:
Bereitstellen einer Schalenform, umfassend eine Zone zur Bildung des Auftriebskörperabschnitts (46, 146), die über eine Zone zur Bildung des ersten flexiblen Halsabschnitts (148) mit einer Zone zur Bildung des ersten Kragenabschnitts (26, 126) verbunden ist, und
Einbringen diskreter Auftriebselemente in die Zone zur Bildung des Auftriebskörperabschnitts (46, 146) vor einem Formgebungsprozess,
wobei die Zone zur Bildung des ersten flexiblen Halsabschnitts (148) eine Tiefe aufweist, die zu gering ist, um die einzelnen Auftriebselemente aufzunehmen, sodass die einzelnen Auftriebselemente aus dem ersten flexiblen Halsabschnitt (148) und aus dem ersten Kragenabschnitt (26, 126) ausgeschlossen sind.

## Revendications

1. Module de flottabilité (10, 100) pour montage sur un élément allongé (12) qui doit être déployé sous l'eau, le module de flottabilité (10, 100) comprenant au moins deux coques (14a, 14b, 114) à assembler l'une à l'autre autour de l'élément allongé (12), chaque coque comprenant un corps monobloc comprenant :
une partie corps de flottabilité (46, 146) ;
une première partie collier (26, 126) accouplée à la partie corps de flottabilité (46, 146) par le biais d'une première partie col flexible (148) ;
une seconde partie collier (28, 128) accouplée au corps de flottabilité par le biais d'une seconde partie col flexible (150) ;
la partie corps de flottabilité (46, 146) étant entre la première partie collier (26, 126) et la seconde partie collier (28, 128), et les coques (14a, 14b, 114) formant, lorsqu'elles sont assemblées, un module de flottabilité (10, 100) dans lequel :
les parties corps de flottabilité (46, 146) forment ensemble un corps de flottabilité ;
les premières parties collier (26, 126) forment ensemble un premier collier destiné à englober l'élément allongé (12) ;
les premières parties col flexible (148) forment ensemble un premier col flexible accouplant le premier collier au corps de flottabilité, le premier col flexible permettant un certain mouvement angulaire du premier collier par rapport au corps de flottabilité ;
les secondes parties collier (28, 128) forment ensemble un second collier destiné à englober l'élément allongé (12) ;
les secondes parties col flexible (150) forment ensemble un second col flexible accouplant la seconde partie au corps de flottabilité, le second col flexible permettant un certain mouvement angulaire du second collier par rapport au corps de flottabilité ;
un passage traversant (20) mène à travers le premier collier, le premier col flexible, le corps de flottabilité, le second col flexible et le second collier pour recevoir l'élément allongé (12), le passage ayant une région surdimensionnée entre les colliers pour permettre une courbure de l'élément allongé (12)
de sorte qu'en cours d'utilisation, des changements de courbure de l'élément allongé (12) là où il passe à travers le module de flottabilité (10, 100) sont compensés en raison d'un mouvement angulaire des premier et second colliers.

2. Module de flottabilité (10, 100) selon la revendication 1 dans lequel la première partie col converge à partir du corps de flottabilité en direction du premier collier.

3. Module de flottabilité (10, 100) selon la revendication 2 dans lequel la seconde partie col converge à partir du corps de flottabilité en direction du second collier.

4. Module de flottabilité (10, 100) selon l'une quelconque revendication précédente dans lequel chaque coque comprend un moulage monobloc en matières plastiques.

5. Corps de flottabilité selon la revendication 4 dans lequel le corps de flottabilité incorpore des éléments de flottabilité distincts qui ne sont pas présents dans les colliers ou dans les éléments flexibles.

6. Module de flottabilité (10, 100) selon la revendication 5 dans lequel les éléments de flottabilité distincts sont des macrosphères.

7. Module de flottabilité (10, 100) selon la revendication 5 ou la revendication 6 dans lequel les première et seconde parties col flexible (148, 150) ont l'une et l'autre une épaisseur qui est trop petite pour loger les éléments de flottabilité distincts.

8. Module de flottabilité (10, 100) selon l'une quelconque revendication précédente, comprenant en outre une première sangle (36) pouvant être agencée autour des premières parties collier (26, 126) pour fixer le premier collier autour de l'élément allongé (12).

9. Module de flottabilité (10, 100) selon la revendication 8, comprenant en outre une seconde sangle (38) pouvant être agencée autour des secondes parties collier (28, 128) pour fixer le second collier autour de l'élément allongé (12).

10. Module de flottabilité (10, 100) selon l'une quelconque revendication précédente dans lequel chaque coque comprend au moins une cavité adjacente à au moins l'une des parties col flexible.

11. Module de flottabilité (10, 100) selon la revendication 10 dans lequel la partie col flexible comprend une paroi partiellement tronconique.

12. Procédé de fabrication d'un module de flottabilité (10, 100) selon la revendication 4 ou selon l'une quelconque revendication ultérieure prise en dépendance de la revendication 4, le procédé comprenant :
la fourniture d'un moule de coque comprenant une zone permettant de former la partie corps de flottabilité (46, 146), communiquant par l'intermédiaire d'une zone permettant de former la première partie col flexible (148) avec une zone permettant de former la première partie collier (26, 126), et
l'introduction d'éléments de flottabilité distincts dans la zone permettant de former la partie corps de flottabilité (46, 146) avant un processus de moulage,
dans lequel la zone permettant de former la première partie col flexible (148) a une profondeur qui est trop petite pour loger les éléments de flottabilité distincts, de sorte que les éléments de flottabilité distincts sont exclus de la première partie col flexible (148) et de la première partie collier (26, 126).
